# EUROPÄISCHE PATENTSCHRIFT

(11) **EP 4 208 318 B1**
(45) Veröffentlichungstag und Bekanntmachung des Hinweises auf die Patenterteilung: **06.11.2024**
(21) Anmeldenummer: 21785759.8
(22) Anmeldetag: 31.08.2021
(51) Int. Cl.: B25J 15/04, B25J 19/00

(54) **SCHICHTMODUL, ADAPTERSYSTEM UND SCHICHTMODULSYSTEM**
LAYER MODULE, ADAPTER SYSTEM AND LAYER MODULE SYSTEM
MODULE DE COUCHE, SYSTÈME D'ADAPTATEUR ET SYSTÈME DE MODULE DE COUCHE

(30) Priorität: 02.09.2020 DE 102020005381
(43) Veröffentlichungstag der Anmeldung: 12.07.2023
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2021/000143
(87) Internationale Veröffentlichungsnummer: WO 2022/048700

(56) Entgegenhaltungen:
- EP-A1- 3 694 688
- JP-A- S60 213 493
- US-A1- 2019 358 830

## Beschreibung

Die Erfindung betrifft ein Schichtmodul zum Einsatz an einem Roboter, mit einer eine eingangsseitige mechanische Adaptergeometrie aufweisenden Eingangsseite und mit einer, eine ausgangsseitige mechanische Adaptergeometrie aufweisenden Ausgangsseite, wobei die eingangsseitige mechanische Adaptergeometrie und die ausgangsseitige mechanische Adaptergeometrie zueinander komplementär ausgebildet sind, wobei das Schichtmodul zumindest eine elektrische, elektromechanische, hydraulische und/oder pneumatische Funktionsbaugruppe aufweist und wobei diese Funktionsbaugruppe an der Eingangsseite und/oder an der Ausgangsseite elektrisch, hydraulisch und/oder pneumatisch kontaktierbar ist, ein Adaptersystem aus mindestens zwei derartigen Schichtmodulen sowie ein Schichtmodulsystem aus einem Adaptersystem und einem Festteil, wobei das Festteil mit der freien Eingangsseite oder mit der freien Ausgangsseite des Adaptersystems kraft- und/oder formschlüssig verbunden ist. Aus der DE 10 2017 009 319 B3 sind Schichtmodule und ein

Adaptersystem mit mehreren Schichtmodulen bekannt.

Aus der JPS60213493A ist außerdem ein Werkzeugverbinder mit federbelastetem Verriegelungsteil bekannt.

Der vorliegenden Erfindung liegt die Problemstellung zugrunde, ein schnell wechselbares Schichtmodul, ein Adaptersystem mit derartigen Schichtmodulen und ein Schichtmodulsystem mit einem Adaptersystem zu entwickeln.

Diese Problemstellung wird mit den Merkmalen des Hauptanspruches gelöst. Dazu weist das Schichtmodul mindestens zwei federbelastete, verschiebbar oder verschwenkbar gelagerte Verriegelungsteile und mindestens zwei in Längsrichtung des Schichtmoduls orientierte, geometrisch unterschiedlich ausgebildete Führungselemente auf. Jedes der Verriegelungsteile umgreift jeweils ein Führungselement, sodass das Schichtmodul mit einem, einen zur Eingangsseite oder zur Ausgangsseite komplementären Festteilausgang aufweisenden Festteil und/oder mit mindestens einem weiteren Schichtmodul kraft- und/oder formschlüssig kuppelbar ist.

Im Adaptersystem aus mindestens zwei derartigen Schichtmodulen ist die Ausgangsseite eines ersten dieser Schichtmodule mit der Eingangsseite eines zweiten dieser Schichtmodule kraft- und/oder formschlüssig verbunden.

Im Schichtmodulsystem ist die Ausgabeseite des Festteils komplementär zu der mit dieser gekoppelten Eingangsseite oder Ausgangsseite des Adaptersystems ausgebildet.

Beim Zusammenbau der Schichtmodule wird die Lage der einzelnen Schichtmodule zueinander mittels der Führungselemente bestimmt. Die jeweils federbelasteten Verriegelungselemente sichern nach Fügen kraft- und formschlüssig die Lage der Schichtmodule zueinander.

Weitere Einzelheiten der Erfindung ergeben sich aus den Unteransprüchen und der nachfolgenden Beschreibung schematisch dargestellter Ausführungsformen.
- Figur 1:: Kameramodul als Schichtmodul;
- Figur 2:: Unteransicht der Figur 1;
- Figur 3:: Einsatzstück;
- Figur 4:: erstes Führungselement;
- Figur 5:: zweites Führungselement;
- Figur 6:: Verriegelungsteil;
- Figur 7:: Querschnitt des Schichtmoduls aus Figur 1;
- Figur 8:: Längsschnitt durch Figur 1 parallel zur vertikalen Mittenlängsebene;
- Figur 9:: Kraftmessmodul als Schichtmodul;
- Figur 10:: Unteransicht von Figur 9;
- Figur 11:: Unterteil des Gehäusekörpers;
- Figur 12:: Oberteil des Gehäusekörpers;
- Figur 13:: Isometrische Schnittdarstellung des Schichtmoduls nach Figur 9;
- Figur 14:: Schichtmodul als Rechenmodul;
- Figur 15:: Schnitt durch das Schichtmodul aus Figur 14;
- Figur 16:: Schichtmodul als Düsenmodul;
- Figur 17:: Schnitt durch das Schichtmodul der Figur 16;
- Figur 18:: Variante des Düsenmoduls;
- Figur 19:: Düsenmodul mit zentraler Versorgung;
- Figur 20:: Schnitt eines Schichtmoduls mit einem Griffelement;
- Figur 21:: Festteil;
- Figur 22:: System aus zwei Schichtmodulen;
- Figur 23:: Festteil als Y-Festteil;
- Figur 24:: Schichtmodulsystem mit Festteil.

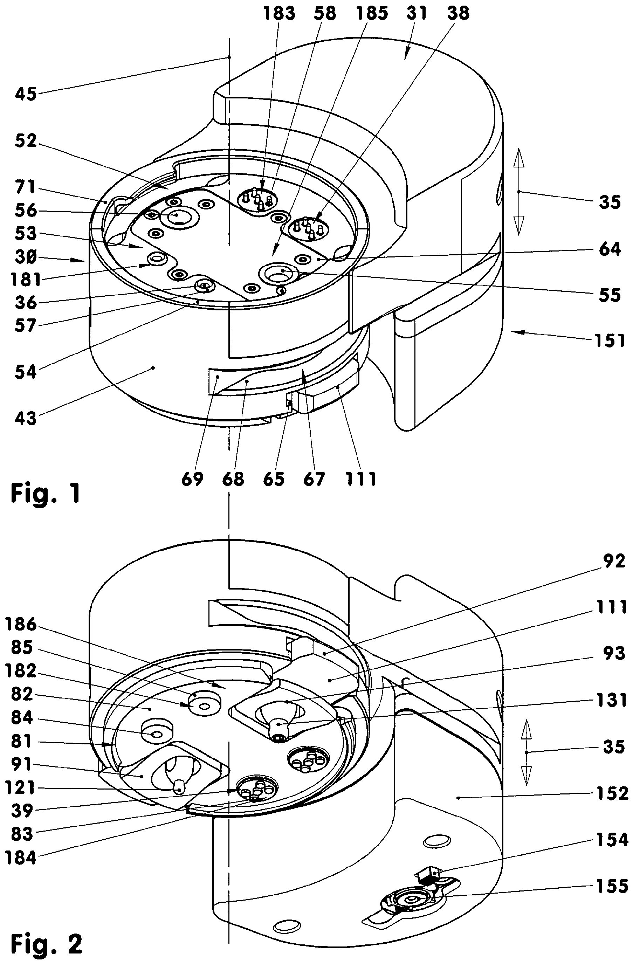

Die Figuren 1 - 8 zeigen ein Schichtmodul (30) und einige seiner Einzelteile. Derartige Schichtmodule (30) werden beispielsweise an Industrierobotern eingesetzt. Sie sitzen z.B. an einem Arm des Roboters zwischen einem Gelenk und beispielsweise mindestens einem Werkzeug, z.B. mindestens einem Handhabungswerkzeug, Bearbeitungswerkzeug, Messwerkzeug, Kamera, etc. Handhabungswerkzeuge sind beispielsweise Greifwerkzeuge, Schiebewerkzeuge, Ziehwerkzeuge, etc. Diese können elektrisch, pneumatisch oder hydraulisch betätigt sein. Bearbeitungswerkzeuge sind beispielsweise spanende oder spanlos bearbeitende Werkzeuge, z.B. Fräser, Bohrer, Sägen, Biegestempel, etc. Das Schichtmodul (30) kann auch ohne nachgeschaltetes Werkzeug am Arm des Roboters angeordnet sein, z.B. bei der Ausbildung des Schichtmoduls als Kameramodul (31).

An einem Arm kann dabei ein einzelnes Schichtmodul (30) angeordnet sein. Es ist auch denkbar, an einem Arm mehrere derartiger Schichtmodule (30) miteinander zu verbinden. Die einzelnen, hintereinandergeschalteten Schichtmodule (30) können unterschiedlich ausgebildet sein. Das einzelne Schichtmodul (30) hat eine Funktionsbaugruppe (41). Die einzelne Funktionsbaugruppe (41) hat z.B. eine elektrische, optische, pneumatische und/oder hydraulische Eingangsgröße und wandelt diese in eine elektrische, elektromechanische, pneumatische und/oder hydraulische Ausgangsgröße um. Jedes Schichtmodul (30) kann eine andere Funktionsbaugruppe (41) aufweisen. Beispielsweise folgt das Handhabungsgerät dann dem letzten dieser Schichtmodule (30).

Das einzelne Schichtmodul (30) ist im Ausführungsbeispiel scheibenförmig ausgebildet. Es hat ein Gehäuse (51), das in seiner Längsrichtung (35) von einer Eingangsseite (52) und von einer Ausgangsseite (81) begrenzt ist. In den Darstellungen der Figuren 1 und 2 liegt die Eingangsseite (52) oben und die Ausgangsseite (81) unten. Beispielsweise zeigt die Eingangsseite (52) zum Arm des Roboters und die Ausgangsseite (81) in Richtung des Greifwerkzeugs. Das Schichtmodul (30) kann auch so ausgebildet sein, dass die hier als Ausgangsseite (81) bezeichnete Seite zum Arm des Roboters orientiert ist. Die als Eingangsseite (52) bezeichnete Seite zeigt dann z.B. zum Handhabungsgerät.

Im dargestellten Ausführungsbeispiel trägt das Schichtmodul (30) ein Kamerasystem (151), das in die Richtung der Ausgangsseite (81) orientiert ist. Das Kamerasystem (151) ist Teil der Funktionsbaugruppe (41) des Schichtmoduls (30).

Die Eingangsseite (52) ist schalenförmig aufgebaut. Sie hat einen Deckenbereich (53) und einen über diesen überstehenden Rand (54). Im Deckenbereich (53) des Grundkörpers (61) sind in diesem Ausführungsbeispiel zwei Führungselementaufnahmen (55, 56) unterschiedlicher Größe angeordnet. In der Darstellung der Figur 1 hat die rechte Führungselementaufnahme (55) einen grö-ßeren Querschnitt als die linke Führungselementaufnahme (56).

Auf der dem Kamerasystem (151) abgewandten Seite des Deckenbereichs (53) hat das Schichtmodul (30) zwei Pneumatikkanäle (36). Diese haben an ihrem eingangsseitigen Kanaleingang (86) jeweils einen ringförmigen Dichtungseinsatz (57). Die beiden Kanaleingänge (86) bilden im Ausführungsbeispiel einen schichtmodulseitigen Teil einer pneumatischen Eingangsschnittstelle (181).

Zwischen den Führungselementaufnahmen (55, 56) und dem Kamerasystem (151) sind zwei Gruppen (38) elektrischer Eingangskontakte (58) angeordnet. Diese bilden ein eingangsseitiges elektrisches Schnittstellenufer (183). Im Ausführungsbeispiel hat jede der Gruppen (38) fünf Eingangskontakte (58). Der einzelne Eingangskontakt (58) ist als federbelasteter Kontaktstift (59) ausgebildet und steht über die Ebene des Deckenbereichs (53) heraus.

Der Rand (54) ist ringförmig ausgebildet und umgibt den Deckenbereich (53) vollständig. Er hat eine ebene Oberseite (62), die z.B. normal zur Längsrichtung (35) des Schichtmoduls (30) orientiert ist. Im Ausführungsbeispiel weist der Rand (54) zwei Einsatzstücke (71) auf. Diese Einsatzstücke (71) sind beispielsweise einander gegenüber angeordnet. Im oberen Bereich der Darstellung der Figur 1 weisen sie einen nach innen gerichteten Umgriffsrand (72) auf. Der Innenraum (42) des Schichtmoduls (30) ist mittels eines Deckels (64) abgedeckt. Die Umgriffsränder () und die Führungselementaufnahmen (55, 56) bestimmen in diesem Ausführungsbeispiel die eingangsseitige mechanische Adaptergeometrie (185) des Schichtmoduls (30).

Das Gehäuse (51) des Schichtmoduls (30) wird beispielsweise durch einen Grundkörper (61) und die genannten Einsatzstücke (71) gebildet. Der Grundkörper (61) ist im Ausführungsbeispiel aus Aluminium hergestellt. Der Elastizitätsmodul dieses Werkstoffs beträgt beispielsweise 70000 Newton pro Quadratmillimeter.

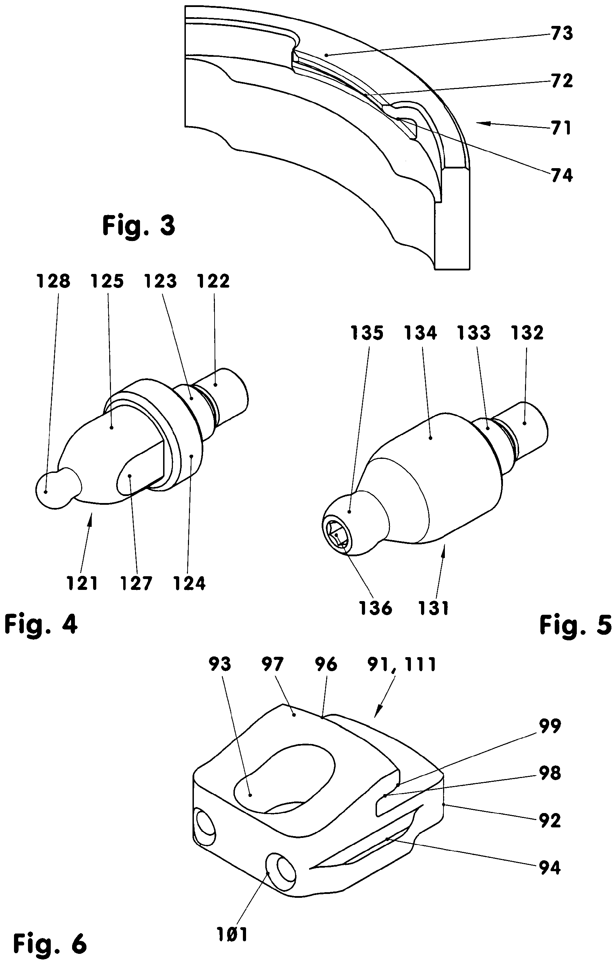

Die Figur 3 zeigt ein Einsatzstück (71). Die beiden Einsatzstücke (71) sind im Ausführungsbeispiel identisch zueinander ausgebildet. Sie haben eine schalenabschnittsförmige Gestalt. Der Umgriffsrand (72) überdeckt einen Sektor von beispielsweise 67 Grad. Jeder Umgriffsrand (72) ist im Querschnitt keilförmig ausgebildet. Seine Oberseite (73) und seine Unterseite (74) schließen im Ausführungsbeispiel einen Winkel von 5 Grad ein. Die Scheitellinie dieses Winkels ist in Richtung der Längsachse (45) orientiert. Die Oberseite (73) liegt bei montierten Einsatzstücken (71) in der Ebene der ebenen Fläche (63) des Randes (54). Außerhalb und unterhalb des Umgriffsrandes (72) entspricht der Innendurchmesser der Einsetzstücke (71) dem Innendurchmesser des Randes (54) des Grundkörpers (61). Der Außendurchmesser der Einsatzstücke (71) entspricht dem Außendurchmesser des Grundkörpers (61).

Die Einsatzstücke (71) sind in diesem Ausführungsbeispiel aus Stahl hergestellt. Der Elastizitätsmodul dieses Werkstoffs beträgt 210.000 Newton pro Quadratmillimeter. Dieser Elastizitätsmodul beträgt damit das Dreifache des Elastizitätsmoduls des Grundkörpers (61). Die Werkstoffe können so gewählt sein, dass der Elastizitätsmodul der Einsatzstücke (71) mehr als das Doppelte des Elastizitätsmoduls des Grundkörpers (61) beträgt. Es ist auch denkbar, die Einsatzstücke (71) als Austauschteile einzusetzen. Hierfür können sie beispielsweise aus einem Kunststoff hergestellt sein.

Die Ausgangsseite (81) des Schichtmoduls (30) ist in der Figur 2 dargestellt. Sie hat eine Bodenplatte (82), aus der zwei Führungselemente (121, 131) herausragen. Weiterhin sind an der Bodenplatte (82) zwei Gruppen (39) von Kontaktplatten (83) angeordnet. Diese bilden in diesem Ausführungsbeispiel das ausgangsseitige elektrische Schnittstellenufer (184). In diesem Ausführungsbeispiel hat die Ausgangsseite (81) außerdem zwei Pneumatikanschlüsse (84). Diese Pneumatikanschlüsse (84) bilden im Ausführungsbeispiel einen schichtmodulseitigen Teil einer pneumatischen Ausgangsschnittstelle (182).

Die beiden Führungselemente (121, 131) sind geometrisch unterschiedlich ausgebildet. Das in der Darstellung der Figur 2 links dargestellte Führungselement (121), im Folgenden erstes Führungselement (121) genannt, hat einen schmäleren Führungselementkopf (128) als das rechts dargestellte zweite Führungselement (131). Beide Führungselemente (121, 131) sind im Ausführungsbeispiel als Führungsbolzen (121, 131) ausgebildet. Die Führungselemente (121, 131) können auch als Stifte oder Kegel, etc. ausgebildet sein.

Die Figur 4 zeigt den ersten Führungsbolzen (121) des Ausführungsbeispiels. Die Figur 5 zeigt dann den zweiten Führungsbolzen (131) dieses Ausführungsbeispiels. Die beiden Führungsbolzen (121, 131) haben beispielsweise die gleiche Länge. Im Ausführungsbeispiel sind sie aus dem gleichen Werkstoff hergestellt wie die Einsatzstücke (71).

Der erste Führungsbolzen (121) hat ein Außengewinde (122), dessen Nennmaß dem Nennmaß einer Gewindebohrung des Grundkörpers (61) entspricht. An das Außengewinde (122) schließt ein Führungsbund (123) an, dessen Durchmesser größer ist als das Nennmaß der Gewindebohrung. An den Führungsbund (123) grenzt ein Auflagebund (124) an.

An den Auflagebund (124) des ersten Führungsbolzens (121) grenzt ein Montageabschnitt (125) an. Dieser hat im Ausführungsbeispiel zwei an seiner Mantelfläche angeordnete, zueinander parallele Schlüsselflächen (127). An den Montageabschnitt (125) schließt der Führungsbolzenkopf (128) an. Dieser ist im Ausführungsbeispiel kalottenförmig ausgebildet.

Der zweite Führungsbolzen (131) hat ebenfalls ein Außengewinde (132) und einen Führungsbund (133). Diese sind so ausgebildet wie die entsprechenden Bereiche des ersten Führungsbolzens (121). Der Auflagebund (134) des zweiten Führungsbolzens (131) ist beispielsweise so lang ausgebildet wie die Summe der Längen des Auflagebunds (124) und des Montageabschnitts (125) des ersten Führungsbolzens (121). Der Führungsbolzenkopf (135) des zweiten Führungsbolzens (131) ist ebenfalls kalottenförmig ausgebildet. An seiner Stirnfläche hat der zweite Führungsbolzen (131) einen Innensechskant (136).

An jedem der beiden Führungselemente (121; 131) ist jeweils ein Verriegelungsteil (91; 111) verschiebbar gelagert. Das einzelne Verriegelungsteil (91; 111) hat einen nach außen zeigenden Griffbereich (92). Die beiden Verriegelungsteile (91, 111) sind einander gegenüber am Schichtmodul (30) angeordnet. Im Ausführungsbeispiel liegen sie in einer gemeinsamen Ebene normal zur Längsachse (45) des Schichtmoduls (30). Auch ein anderer Versatzwinkel als 180 Grad der beiden Verriegelungsteile (91, 111) relativ zueinander ist denkbar. Beispielsweise können sie in einem Bereich von um 90 Grad bis zu dem oben genannten Winkel zueinander versetzt sein. Die Griffbereiche (92) können eben oder nach außen gewölbt oder nach innen gewölbt ausgebildet sein. Im Ausführungsbeispiel bestimmten die Verriegelungsteile (91, 111) und die Führungselemente (121, 131) die ausgangsseitige mechanische Adaptergeometrie (186) des Schichtmoduls (30).

Es ist auch denkbar, eines der Führungselemente (121; 131) und das zugehörige Verriegelungsteil (91; 111) auf der Eingangsseite (52) und das andere Führungselement (131; 121) und das diesem zugeordnete Verriegelungsteil (111; 91) auf der Ausgangsseite (81) anzuordnen. Auch eine Ausführungsform mit mehr als zwei Führungselementen (121, 131) ist denkbar. Auch können beide Verriegelungsteile (91; 111) mittels eines Griffbereichs (92) betätigt werden.

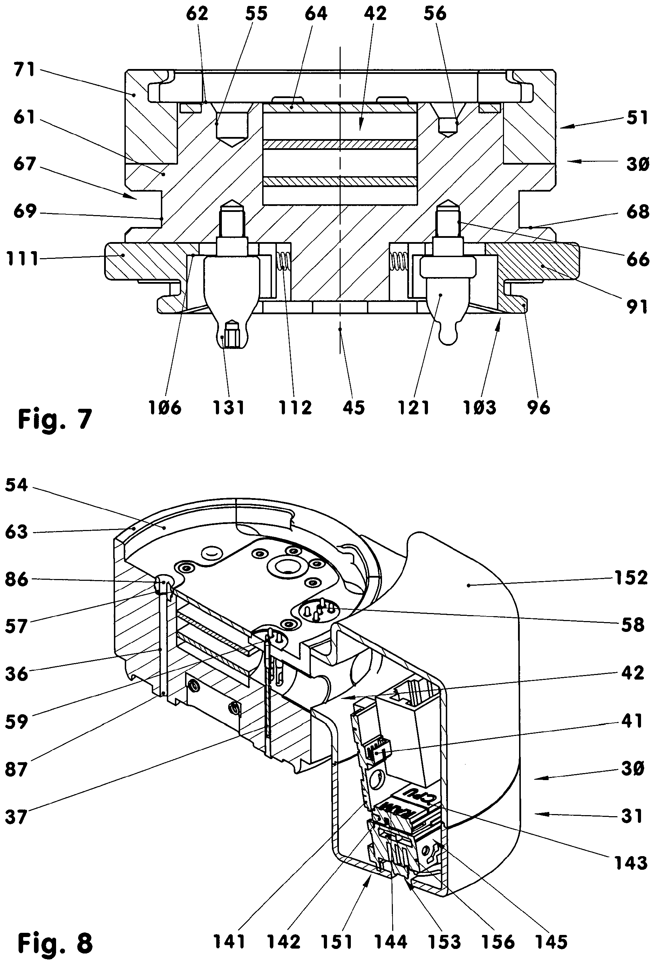

In der Figur 6 ist ein Verriegelungsteil (91; 111) dargestellt. Im Ausführungsbeispiel sind beide Verriegelungsteile (91; 111) identisch zueinander ausgebildet. Es ist aber auch denkbar, die beiden Verriegelungsteile (91, 111) z.B. mit unterschiedlicher Breite auszubilden. Das einzelne Verriegelungsteil (91; 111) hat ein zentrales Führungslangloch (93) zur Aufnahme des Führungsbundes (123; 133) des jeweiligen Führungselements (121; 131). Eine Auflagefläche (106) des Führungslanglochs (93) dient zur Anlage des Auflagebunds (124; 134) des jeweiligen Führungsbolzens (121; 131), vgl. Figur 7. Hiermit wird bei montiertem Schichtmodul (30) u.a. ein Abheben oder Verkanten des Verriegelungsteils (91; 111) relativ zum Gehäusekörper (61) verhindert. Das Führungslangloch (93) ist radial zur Längsachse (45) des Schichtmoduls (30) orientiert.

Das einzelne Verriegelungsteil (91; 111) hat weiterhin zwei seitliche Führungsleisten (94). Die Führungsleisten (94) liegen parallel zum Führungslangloch (93). Bei montiertem Schichtmodul (30) sind die Führungsleisten (94) in Führungsnuten (65) des Gehäusekörpers (61) geführt.

An seiner Außenseite hat das Verriegelungsteil (91; 111) den Griffbereich (92). Oberhalb des Griffbereichs (92) und zu diesem beabstandet ist in der Darstellung der Figur 6 ein auskragender Haken (96) angeordnet. Der Griffbereich (92) steht hierbei um 30 % der in radialer Richtung gemessenen Bauteillänge über den Haken (96) heraus. Der Haken (96) ist in einer Draufsicht auf das Verriegelungsteil (91; 111) bogenförmig ausgenbildet. Die Bogenlänge beträgt in einer Normalenebene zur Längsachse (45) 38 Grad. Im Querschnitt, vgl. Figur 7, ist der Haken (96) keilförmig ausgebildet. Der Keilwinkel zwischen der Hakenoberseite (97) und der Hakenunterseite (98) beträgt im Ausführungsbeispiel 5 Grad. Dies ist auch die Größe des Winkels, den die Hakenunterseite (98) mit einer Normalenebene zur Längsachse (45) einschließt. An seinem freien Ende hat der Haken (96) eine an die Hakenunterseite (98) angrenzende Einführschräge (99). Der Winkel zwischen der Einführschräge (99) und der Hakenoberseite (97) beträgt im Ausführungsbeispiel 30 Grad. An seiner zur Längsachse (45) orientierten Rückseite hat das einzelne Verriegelungsteil (91; 111) zwei Federaufnahmen (101). Diese liegen bei montiertem Schichtmodul (30) gleichartigen Federaufnahmen des Grundkörpers (61) gegenüber. Die beiden Verriegelungsteile (91, 111) sind im Ausführungsbeispiel aus dem gleichen Werkstoff hergestellt wie die Einsatzstücke (71).

Oberhalb jedes Verriegelungsteils (91; 111) hat das Schichtmodul (30) je eine Greif- oder Führungsausnehmung (67). Die einzelne Greif- oder Führungsausnehmung (67) hat beispielsweise eine kreisabschnittsförmige Grundfläche (68) und eine konstante Höhe. Die Führungsflächen (69) beider Greif- oder Führungsausnehmungen (67) sind zumindest bereichsweise parallel zueinander orientiert. Die einzelne Greif- oder Führungsausnehmung (67) kann auch einen trapezförmigen, runden, elliptischen, rechteckigen, etc. Querschnitt aufweisen. Im Ausführungsbeispiel entspricht die maximale Tiefe der Greif- oder Führungsausnehmung (67) ihrer Höhe.

Das Kamerasystem (151) des Kameramoduls (31) hat ein Kameragehäuse (152), eine optische Einheit (153) und eine Beleuchtungseinheit (154). Das Kameragehäuse (152) ist an der zylindrischen Mantelfläche (43) des Schichtmoduls (30) angeformt oder befestigt. Im Ausführungsbeispiel steht es in beiden Längsrichtungen (35) über das Schichtmodul (30) über.

Die Figur 7 zeigt einen Querschnitt des Schichtmoduls (30). In dieser Darstellung ist die Eingangsseite (52) oben und die Ausgangsseite (81) unten angeordnet. Im Grundkörper (61) sind die Einsatzstücke (71) befestigt, deren Umgriffsränder (72) gegeneinander zeigen. Der Deckel (64) und das Kameragehäuse (152) verschließen den Innenraum (42) des Schichtmoduls (30), vgl. Figur 8. Im Innenraum (42) ist beispielsweise eine Platine (141) angeordnet. Diese kann mit elektrischen Bauteilen, z.B. Datenverarbeitungs- und Speichereinheiten, bestückt sein.

Die Mittellinien der Führungselementaufnahmen (55, 56) fluchten mit den Mittellinien der Führungselemente (121, 131). In der Darstellung der Figur 7 liegt die erste Führungselementaufnahme (56) oberhalb des ersten Führungselements (121). Die zweite Führungselementaufnahme (55) ist in dieser Darstellung oberhalb des zweiten Führungselements (131) angeordnet. Hierbei ist eine erste Führungselementaufnahme (56) zur Aufnahme eines ersten Führungselements (121) und eine zweite Führungselementaufnahme (55) zur Aufnahme eines zweiten Führungselements (131) eines weiteren Schichtmoduls (30) ausgebildet.

Die beiden Führungsbolzen (121, 131) sind in den Grundkörper (61) eingeschraubt. Jedes der Führungselemente (121; 131) durchdringt jeweils ein Verriegelungselement (91; 111) im Führungslangloch (93) und lagert dieses verschiebbar. Die Hintergriffshaken (96) zeigen nach außen. Das einzelne Verriegelungselement (91; 111) ist mit zwei Federelementen (112) am Grundkörper (61) abgestützt. Die beispielsweise als Druckfedern (112) ausgebildeten Federelemente (112) sind hierbei in den Federaufnahmen (101) des jeweiligen Verriegelungsteils (91; 111) und in den Federaufnahmen des Grundkörpers (61) gelagert. Die jeweiligen Verriegelungsteile (91; 111) werden mittels der Federelemente (112) radial nach außen belastet. Der Hub des einzelnen Verriegelungsteils (91; 111) wird hierbei durch das jeweils zugeordnete Führungselement (121; 131) begrenzt.

In der Figur 8 ist ein isometrischer Längsschnitt in einer Normalenebene zur Schnittebene der Figur 7 dargestellt. Die Schnittebene der Figur 8 durchdringt hierbei die Pneumatikkanäle (36) und die elektrischen Leitungen (37). Auch in dieser Darstellung ist die Eingangsseite (52) des Schichtmoduls (30) oben und die Ausgangsseite (81) unten.

Der einzelne Pneumatikkanal (36) verbindet die Eingangsseite (52) des Schichtmoduls (30) mit der Ausgangsseite (81). Er ist parallel zur Längsachse (45) des Schichtmoduls (30) angeordnet. Der jeweilige Kanalausgang (87) und der jeweilige Kanaleingang (86) liegen in der Darstellung der Figur 8 senkrecht übereinander. Hierbei sind z.B. der Dichtungseinsatz (57) auf der Eingangsseite (52) und der Anlagebund (85) auf der Ausgangsseite (81) angeordnet. Auch eine umgekehrte Anordnung ist denkbar.

Es ist denkbar, die beiden Pneumatikkanäle (36) für unterschiedliche Aufgaben einzusetzen. So kann z.B. einer der Pneumatikkanäle (36) z.B. Luft oder Stickstoff von der Eingangsseite (52) zur Ausgangsseite (81) fördern. Der andere Pneumatikkanal (36) fördert dann ein pneumatisches Medium z.B. in der anderen Richtung. Somit kann beispielsweise ein doppeltwirkendes Ventil in der Handhabungsvorrichtung betätigt werden. Auch können z.B. beide Pneumatikkanäle (36) z.B. beim Einsatz eines Sauggreifers zur Erzeugung eines Unterdrucks am Saugnapf und zur Entlastung eingesetzt werden.

Innerhalb des Schichtmoduls (30) kann der einzelne Pneumatickanal (36) ein Wege- oder Sperrventil aufweisen. Damit kann beispielsweise beim Einsatz des Schichtmoduls (30) als Endmodul ein Verlust pneumatischen Mediums verhindert und eine Verschmutzung der Pneumatikkanäle verhindert werden.

Der einzelne Pneumatikkanal (36) kann auch eine Abzweigung aufweisen. Beispielsweise kann der Bereich der elektrischen Bauteile mit Sperrluft versorgt werden, um das Eindringen von Verunreinigen zu verhindert. Auch kann der Bereich vor der Linse (155) und/oder vor der Beleuchtungseinheit (154) des Kamerasystems (151) mit Luft freigeblasen werden, um gleichbleibende optische Verhältnisse zu gewährleisten. Auch kann z.B. eine Verschlussblende der Linse (155) pneumatisch betätigt sein.

Auch die einzelne elektrische Leitung (37) verbindet die Eingangsseite (52) mit der Ausgangsseite (81). Jeweils ein Kontaktstift (59) ist elektrisch mit einer Kontaktplatte (83) verbunden. Die einzelne elektrische Leitung (37) ist hierbei parallel zur Längsachse (45) des Schichtmoduls (30) angeordnet.

Die elektrischen Leitungen (37) sind z.B. Energie-, Daten- und Signalleitungen. Zumindest einige dieser elektrischen Leitungen (37) sind mit dem Kamerasystem (151) verbunden. Dies sind z.B. zwei Energieleitungen, mindestens eine Datenleitung und mindestens eine Signalleitung. Sie speisen beispielsweise ein Steuer- und Auswertemodul (142) des Kamerasystems (151). Dieses Steuer- und Auswertemodul (142) umfasst beispielsweise eine Datenverarbeitungs- und Speichereinheit (145). Die Datenverarbeitungs- und Speichereinheit (145) weist z.B. eine Recheneinheit (143) und eine Datenspeichereinheit (144) auf. Mit dem Steuer- und Auswertemodul (142) werden zum einen die Funktionen der Kamera (156) und der Beleuchtung (154) gesteuert, zum anderen die von der Kamera (156) erfassten Informationen ausgewertet. In der Recheneinheit (143) können diese Informationen beispielsweise stochastisch ausgewertet werden und dann in der Datenspeichereinheit (144) abgespeichert werden.

Im Schichtmodul (30) kann auch ein Sende- und Empfangsbaustein vorgesehen sein. Damit können beispielsweise die stochastischen Daten direkt aus dem Schichtmodul (30) abgefragt werden. Auch können beispielsweise Steuerbefehle für die Kamera (156) eingegeben werden

Das Schichtmodul (30) kann auch einen Energiespeicher aufweisen. Dieser kann beispielsweise die Stromversorgung der Speichereinheit (144) puffern. So können z.B. nach einer Demontage des Schichtmoduls (30) die in der Datenspeichereinheit (144) gespeicherten Daten weiterhin ausgelesen werden.

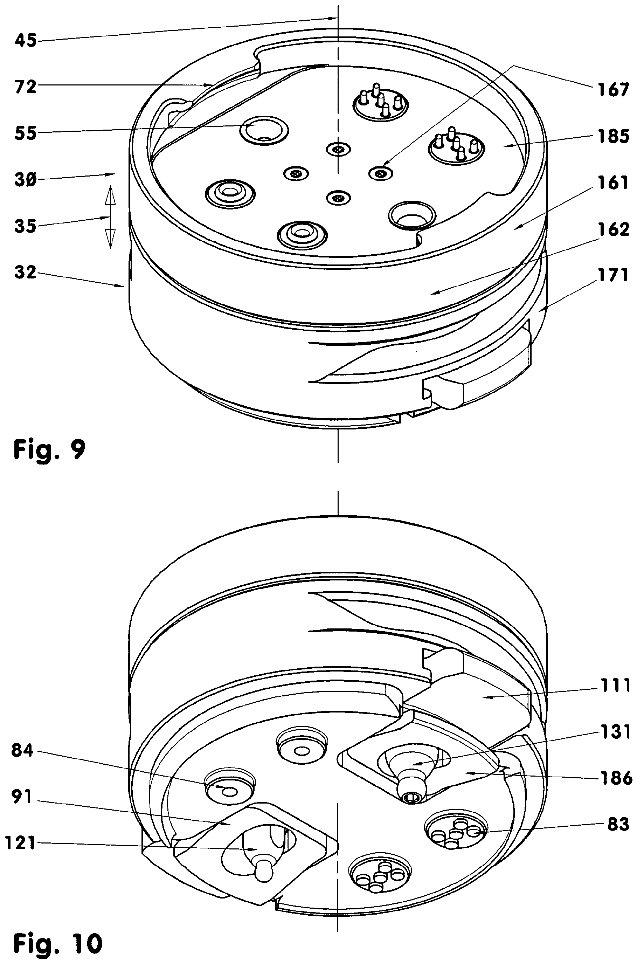

Die Figuren 9 - 13 zeigen ein Schichtmodul (30) in der Bauform eines Kraftmessmoduls (32). Die Eingangsseite (52) und die Ausgangseite (81) dieses Schichtmoduls (30) sind beispielsweise so ausgebildet, wie im Zusammenhang mit dem ersten Ausführungsbeispiel beschrieben. Ein Deckel (64) verschließt den Innenraum (42) des Schichtmoduls (30). Auch das Kraftmessmodul (32) hat von der Eingangsseite (52) zur Ausgangsseite (81) durchgehende elektrische Leitungen (37) und Pneumatikkanäle (36). Diese sind so ausgebildet, wie im Zusammenhang mit dem Kameramodul (31) beschrieben. Auch die Ausbildung der Führungselemente (121, 131), der Führungselementaufnahmen (55, 56) und der Verriegelungsteile (91, 111) entsprechen der im Zusammenhang mit dem ersten Ausführungsbeispiel beschriebenen Ausbildung.

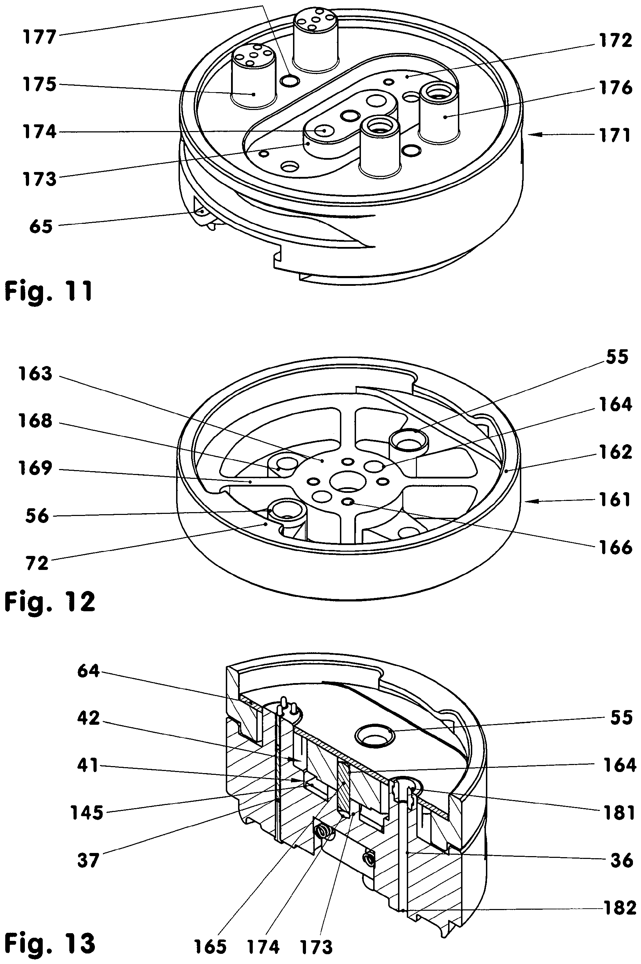

Das Gehäuse (51) umfasst ein eingangsseitiges Gehäuseteil (161) und ein ausgangsseitiges Gehäuseteil (171). Das ausgangsseitige Gehäuseteil (171), vgl. Figur 11, ist beispielsweise aus dem Werkstoff des Grundkörpers (61) des ersten Ausführungsbeispiels hergestellt. Das eingangsseitige Gehäuseteil (161), vgl. Figur 12, ist im Ausführungsbeispiel aus dem Werkstoff der Einsatzstücke (71) des Kameramoduls (31) hergestellt. Im montierten Zustand sind das eingangsseitige Gehäuseteil (161) und das ausgangsseitige Gehäuseteil (171) im zentralen Bereich miteinander verschraubt.

Das ausgangsseitige Gehäuseteil (171) hat beidseitig Führungsnuten (65) für die Verriegelungselemente (91, 111). Diese sind so ausgebildet, wie im Zusammenhang mit dem ersten Ausführungsbeispiel beschrieben. Auf seiner den Führungsnuten (65) abgewandten Seite hat das ausgangsseitige Gehäuseteil (171) einen Platinenauflage (172). An einem die Platinenauflage (172) durchdringenden Zentralsteg (173) sind zwei Zentrierbolzenaufnahmen (174) eingeformt. Im montierten Zustand des Kraftmessmoduls (32) ist hier eine Datenverarbeitungs- und Speichereinheit (145) angeordnet, vgl. Figur 13.

Die Datenverarbeitungs- und Speichereinheit (145) umfasst beispielsweise eine Recheneinheit (143), den Datenspeicher (144) und einen Energiespeicher. Diese sind beispielsweise so aufgebaut, wie im Zusammenhang mit dem ersten Ausführungsbeispiel beschrieben.

Aus der den Führungsnuten (65) abgewandten Seite des ausgangsseitigen Gehäuseteils (171) ragen vier Führungsrohre (175, 176) heraus. Zwei dieser Führungsrohre (176) umgreifen die Pneumatikkanäle (36). Die zwei anderen Führungsrohre (175) bilden Leerrohre für die elektrischen Leitungen (37). Zwischen jeweils zwei gleichartigen Führungsrohren (175, 175; 176, 176) ist jeweils ein Innengewinde (177) in das ausgangsseitige Gehäuseteil (171) eingebracht.

Das eingangsseitige Gehäuseteil (161), vgl. Figur 12, ist als Speichenrad aufgebaut. Es hat einen Außenring (162), in den die Umgriffsränder (72) intergiert sind. Auch die Führungselementaufnahmen (55, 56) sind starr mit dem Außenring (162) verbunden. Die geometrische Ausbildung der Führungselementaufnahmen (55, 56) und ihre Anordnung relativ zu den Umgriffsrändern (72) entspricht der Ausbildung und Anordnung dieser Teile im Kameramodul (31).

Die Nabe (163) des eingangsseitigen Gehäuseteils (161) hat zwei Zentrierbolzenaufnahmen (164), die bei montiertem Kraftmessmodul (32) mit den Zentrierbolzenaufnahmen (174) des Zentralstegs (173) fluchten. Bei montiertem Kraftmessmodul (32) zentrieren z.B. zwei Zentrierbolzen (165) das ausgangsseitige Gehäuseteil (171) und das eingangsseitige Gehäuseteil (161) zueinander. Weiterhin sind in der Nabe (163) Gewindebohrungen (166) zur Aufnahme von Deckelverschlußschrauben (167) angeordnet. An der Nabe (163) sind außerdem zwei einander gegenüberliegende Ösen (168) angeformt. Bei montiertem Kraftmessmodul sind das eingangsseitige Gehäuseteil (161) und das ausgangsseitige Gehäuseteil (171) mittels Schrauben aneinander befestigt. Diese Schrauben durchdringen die Ösen (168) und sind in den Innengewinden (177) fixiert.

Der Außenring (162) und die Nabe (163) sind im Ausführungsbeispiel mittels vier radial orientierter Speichen (169) miteinander verbunden. Die einzelne Speiche (169) hat einen z.B. rechteckigen Querschnitt, wobei die Ausdehnung in der Längsrichtung (35) größer ist als in einer Richtung tangential zur Umfangsrichtung. An den Speichen (169) und beispielsweise an der Nabe (163) sind z.B. Dehnmessstreifen angebracht. Beispielsweise sind an jeder Speiche (169) zwei Dehnmessstreifen befestigt.

Bei montiertem Kraftmessmodul (32) ist der Außenring (162) relativ zur Nabe (163) und zum ausgangseitigen Gehäuseteil (171) unter Verformung der Speichen (169) verdreh- und/oder verschiebbar. Die mittels der Dehnmesstreifen ermittelte Verformung der Speichen (169) ist ein Maß für Kräfte und für Momente, mit denen das ausgangsseitige Gehäuseteil (171) relativ zum eingangsseitigen Gehäuseteil (161) belastet wird. Aus den Änderungen der elektrischen Widerstände der Dehnmessstreifen kann die Recheneinheit (143) die Verformungsrichtung und den Betrag der Verformung ermitteln. Das Ergebnis wird beispielsweise im Datenspeicher (144) als Einzelwert und/oder als gemittelter Wert gespeichert. Gegebenenfalls kann der so ermittelte Wert mit einem Zeitstempel versehen werden. Die Recheneinheit (143) und/oder der Datenspeicher (144) können einen Sende- und Empfangsbaustein aufweisen. Dieser ist beispielsweise so aufgebaut, wie im Zusammenhang mit dem ersten Ausführungsbeispiel beschrieben.

Zur elektrischen Versorgung, zur Datenübermittlung und zur Signalübertragung ist die Datenverarbeitungs- und Speichereinheit (145) mit den elektrischen Leitungen (37) verbunden. Auch kann das Kraftmessmodul (32) mit Sperrluft beaufschlagt sein.

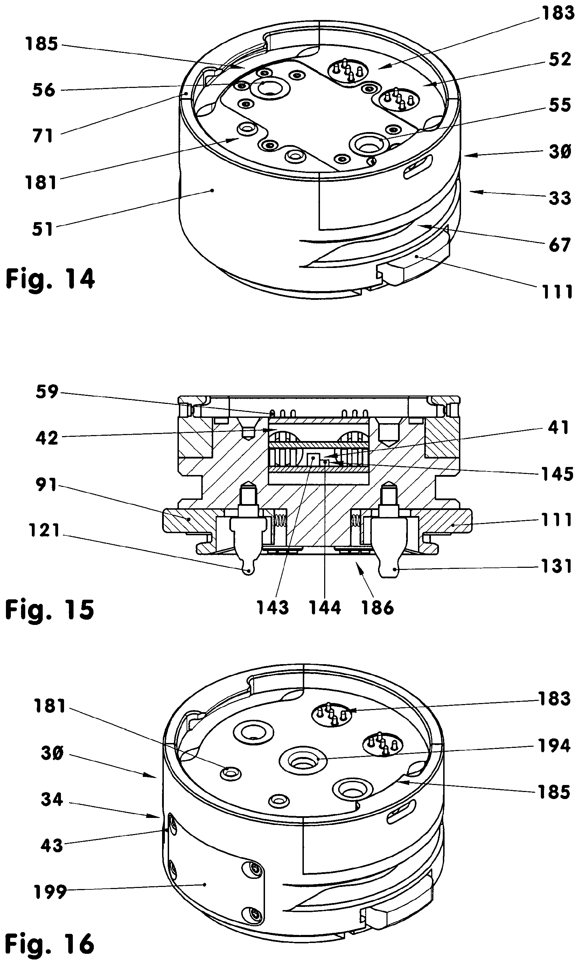

Die Figuren 14 und 15 zeigen ein Schichtmodul (30) in der Bauform eines Rechenmoduls (33). Auch in diesem Schichtmodul (30) ist die Ausgangsseite (81) komplementär zur Eingangsseite (52) ausgebildet. Dies gilt in diesem Ausführungsbeispiel sowohl für die mechanischen Adaptergeometrien (185, 186), als auch für die pneumatischen Anschlüsse (181, 182) und die elektrischen Schnittstellenufer (183, 184). Es ist aber auch denkbar, nur die mechanischen Verbindungselemente (56, 121; 55, 131; 72, 91; 72, 111) zueinander komplementär auszubilden. Sowohl die ausgangsseitige mechanische Adaptergeometrie (186) als auch die eingangsseitige mechanische Adaptergeometrie (185) sind beispielsweise identisch zu den jeweiligen, im Zusammenhang mit den vorhergehenden Ausführungsbeispielen beschriebenen Adaptergeometrien (185, 186) ausgebildet.

Im Innenraum (42) des Rechenmoduls (33) ist als Funktionsbaugruppe (41) eine Datenverarbeitungs- und Speichereinheit (145) angeordnet. Die Datenverarbeitungs- und Speichereinheit (145) ist energie-, signal- und datenmäßig mit den elektrischen Leitungen (37) verbunden. Die Datenverarbeitungs- und Speichereinheit (145) umfasst beispielsweise die gleichen Bauteile wie die Datenverarbeitungs- und Speichereinheit (145) des Kraftmessmoduls (32). Mittels dieser Datenverarbeitungs- und Speichereinheit (145) können beispielsweise Daten, die mittels Sensoren der Greifer erfasst werden, ausgewertet und verdichtet werden. So können z.B. aus den Ist-Daten der Sensoren Steuerbefehle für den Roboter errechnet werden. Aus den verdichteten Daten können sich Angaben über den Verschleiß der Greifvorrichtung oder ihrer Komponenten ergeben. Auch der Innenraum (42) des Rechenmoduls (33) kann mittels Sperrluft beaufschlagt sein. Die hierzu erforderliche Druckluft wird beispielsweise aus den Pneumatikkanälen (36) z.B. über ein Wegeventil und/oder eine Drossel entnommen.

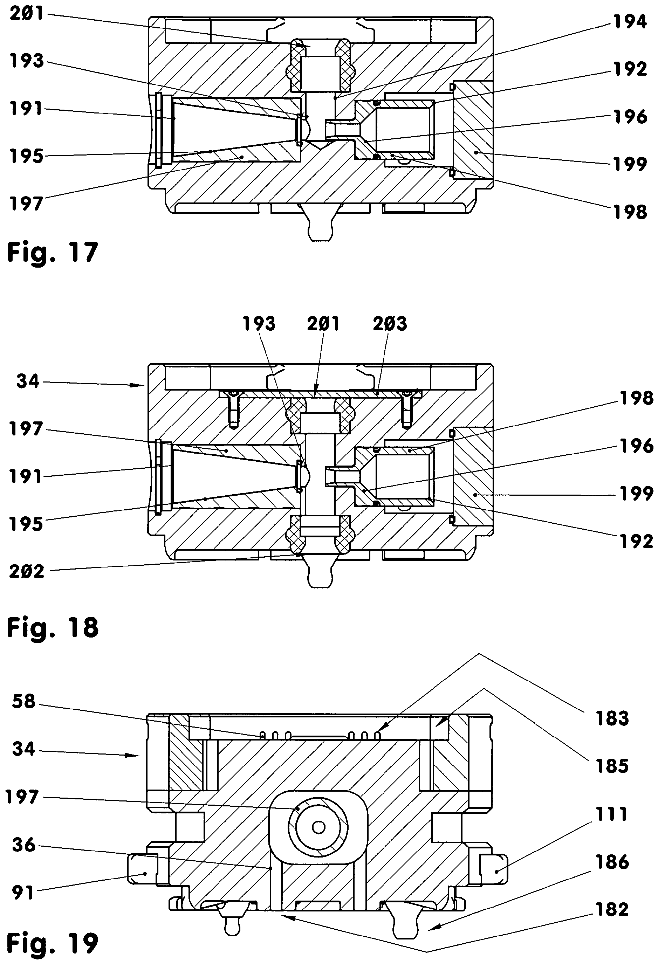

Die Figuren 16 und 17 zeigen ein Schichtmodul (30) in der Bauform eines Düsenmoduls (34). Auch in diesem Schichtmodul (30) sind die Eingangsseite (52) und die Ausgangsseite (81) zueinander ergänzend ausgebildet. Beispielsweise sind die schichtmodulseitigen pneumatischen Schnittstellen (181, 182), die elektrischen Schnittstellenufer (183, 184) und die mechanischen Adaptergeometrien (185, 186) so ausgebildet, wie im Zusammenhang mit den vorhergehenden Ausführungsbeispielen beschrieben. Es ist aber auch denkbar, nur die mechanischen Adaptergeometrien (185, 186) komplementär zueinander zu gestalten.

Das Düsenmodul (34) hat in diesem Ausführungsbeispiel zwei alternative Düseneingänge (191, 192) und einen Düsenausgang (193). Die jeweiligen Düseneingänge (191, 192) sind an der Mantelfläche (43) des Düsenmoduls (34) angeordnet. Zwischen jedem der Düseneingänge (191; 192) und einem Längskanal (194) ist jeweils eine Düse (195; 196) angeordnet. Die jeweilige Düse (195; 196) verjüngt sich zum Längskanal (194) hin. Beide Düsen (195; 196) haben auswechselbare Düseneinsätze (197; 198). Diese können beispielsweise als Venturidüsen ausgebildet sein. In der Darstellung der Figur 17 ist der rechts dargestellte Düseneingang (191) mittels einer Verschlussplatte (199) verschlossen. Bei Druckbeaufschlagung einer an den anderen Düseneingang (192) angeschlossenen Pneumatikleitung ist die Strömungsgeschwindigkeit im Längskanal (194) höher als am Düseneingang (192). Mittels dieses Düsenmoduls (34) ist beispielsweise eine pneumatisch betätigte Greifeinheit antreibbar. Die pneumatische Funktionsbaugruppe (41) eines Schichtmoduls (30) kann einen Unterdruck, z.B. ein Vakuum, oder einen Überdrück erzeugen, wandeln oder übertragen.

In der Darstellung der Figuren 16 und 17 mündet der Längskanal (194) an der Eingangsseite (52). Es ist aber auch denkbar, die Mündung (201) des Längskanals (194) an der Ausgangsseite (81) des Düsenmoduls (34) anzuordnen.

Die Figur 18 zeigt eine Variante des Düsenmoduls (34). Die Funktionsbaugruppe (41) hat hier einen Längskanal (194) mit einer Mündung (201) an der Eingangsseite (52) und einer Mündung (202) an der Ausgangsseite (81). In der Darstellung der Figur 18 ist die eingangsseitige Mündung (201) mittels einer Deckenplatte (203) verschlossen. Alternativ kann auch die ausgansseitige Mündung (202) verschlossen sein. Gegebenenfalls kann sowohl in der Ausführungsform der Figuren 16 und 17, als auch in der Ausführungsform der Figur 18 ein z.B. elektromagnetisch betätigtes Wegeventil zum Umschalten des Gasstroms vorgesehen sein. Auch kann eine Messvorrichtung zum Messen des Drucks und/oder des Volumenstroms des pneumatischen Mediums im Schichtmodul (30) angeordnet sein.

Ein Schichtmodul (30) nach den Figuren 16 - 18 kann zusätzlich oder alternativ einen Drückübersetzer, einen Druckspeicher, einen Verdichter, etc. enthalten. Die elektrische Ansteuerung erfolgt dann mittels der elektrischen Leitungen (37). Gegebenenfalls kann, z.B. in Verbindung mit einer Messvorrichtung, eine Speicher- und Auswerteeinheit (142) vorgesehen sein, wie oben beschrieben.

Die Figur 19 zeigt eine Schnittdarstellung eines Düsenmoduls (34), in dem die Pneumatikkanäle (36) mit dem Düsenausgang (193) verbunden sind. Die Pneumatikkanäle (36) münden hierbei an einer pneumatischen Ausgangsschnittstelle (182). Der Längskanal (194) ist in diesem Ausführungsbeispiel so ausgebildet, wie im Zusammenhang mit den vorhergehenden Ausführungsbeispielen dargestellt.

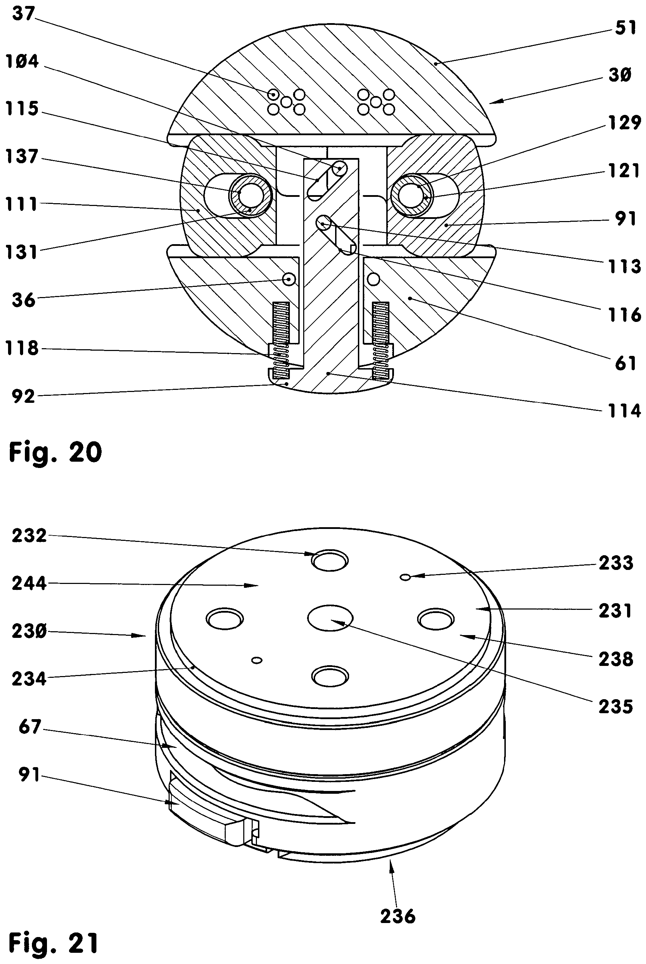

Die Figur 20 zeigt eine Schnittdarstellung eines Schichtmoduls (30) mit einem einzigen Griffbereich (92). Die Ausbildung der Führungselemente (121, 131) und die Schnittstellengeometrie der Verriegelungselemente (91, 111) ist beispielsweise identisch zu den Führungselementen (121, 131) und zu den Schnittstellengeometrien der in den Figuren 1 - 18 dargestellten Schichtmodule (30). Das Schichtmodul (30) der Figur 20 ist damit kompatibel zu den anderen Schichtmodulen (30) einsetzbar und mit diesen kombinierbar. Auch die Pneumatikkanäle (36) und die elektrischen Leitungen (37) der anderen Schichtmodule (30) sind direkt anschließbar. Die äußeren Abmessungen des Gehäuses (51) stimmen beispielsweise mit den entsprechenden Abmessungen der anderen Ausführungsbeispiele überein.

In diesem Schichtmodul (30) sind die beiden Verriegelungsteile (91, 111) gemeinsam mittels eines einzigen, den Griffbereich (92) aufweisenden Tasters (114) betätigbar. Die beiden Verriegelungsteile (91, 111) sind jeweils im Gehäuse (51) verschiebbar gelagert und mittels der im Gehäuse (51) befestigten Führungselemente (121, 131) geführt. Die Führungselemente (121, 131) sind z.B. hohl mit einem innenliegenden Kanal (129, 137) ausgebildet. Das jeweilige Führungslangloch (93) und die Haken (96) sind so ausgebildet wie im Zusammenhang mit dem ersten Ausführungsbeispiel beschrieben. Jedes der Verriegelungsteile (91; 111) hat einen Mitnahmezapfen (104; 113), der jeweils in ein Mitnahmelangloch (115; 116) des Tasters (114) eingreift.

Der Griffbereich (92) steht radial nach außen aus dem Schichtmodul (30) heraus. Er ist im Ausführungsbeispiel mittels zwei Federelementen (118) in die ausgefahrene Stellung belastet. In der Darstellung der Figur 20 sind die zwei z.B. als Druckfedern (118) ausgebildeten Federelemente (118) zwischen dem Grundkörper (61) und dem Griffbereich (92) angeordnet. Auch eine andere Anordnung der Federelemente (118) ist denkbar. Die beiden Mitnahmelanglöcher (115, 116) sind im Ausführungsbeispiel V-förmig zueinander angeordnet. Der von den beiden Mitnahmelanglöchern (115, 116) eingeschlossene Winkel beträgt beispielsweise 90 Grad. Die Mitnahmezapfen (104, 113) liegen jeweils an dem dem Haken (96) zugewandten Ende des Mitnahmelanglochs (115, 116). Die oberhalb der Schnittebene liegenden Haken (96) sind hier nicht dargestellt.

In der dargestellten Verriegelungsstellung (103) drücken die Federelemente (118) über die Zwangsführung (104, 115; 113, 116) der Mitnahmelanglöcher (115, 116) und der Mitnahmezapfen (104, 113) beide Verriegelungsteile (91, 111) z.B. radial nach außen. Die Druckfedern (118) sind gegenüber ihrem entspannten Zustand teilbelastet und teilkomprimiert. Wird der Taster (114) mittels einer äußeren Druckkraft eingeschoben, wird die Belastung der Druckfedern (118) erhöht. Der Taster (114) verschiebt über die Zwangsführungen (104, 115; 113, 116) beide Verriegelungsteile (91, 111) zur Mitte hin. Beispielsweise lösen sich die Haken (96) der Verriegelung. Nach der Wegnahme der manuell oder automatisiert aufgebrachten äu-ßeren Kraft werden die Verriegelungsteile (91, 111) wieder federbelastet in die Verriegelungsstellung (103) verschoben.

Das einzelne federbelastete Verriegelungsteil (91; 111) kann auch in einer Schwenkbewegung z.B. um die Längsachse (45) ein anderes Schichtmodul (30) oder ein Festteil (230) hintergreifen. Hierbei haben zumindest zwei Verriegelungsteile (91, 111) die gleiche Schwenkrichtung. Die Verriegelungsteile (91; 111) können beispielsweise starr miteinander verbunden sein und gemeinsam mittels eines Federelements (112) zum Verriegeln belastet werden. Auch in diesem Ausführungsbeispiel umgreift jedes Verriegelungsteil (91; 111) jeweils ein Führungselement (121; 131). Beim Verschwenken wird das Betätigungselement (91; 111) entlang dieses Führungselements (121; 131) geführt. Zum Lösen der Verriegelung wird eine Druckkraft entweder auf einen oder auf mehrere Taster ausgeübt. Die Übertragung der Kräfte auf die einzelnen Verriegelungsteile (91; 111) erfolgt beispielsweise, wie oben beschrieben.

Die Betätigung kann auch mittels eines z.B. um die Längsachse (45) schwenkbaren Scheibensegments mit nach außen ragender Nase erfolgen. Dieses kann Teil eines federbelasteten Verriegelungsteils (91, 111) sein oder dieses betätigen. Auch die Betätigung beider Verriegelungsteile (91, 111) mittels eines einzelnen Scheibensegments ist denkbar.

Bei allen Varianten ist auch die Zwischenschaltung eines elektrischen Antriebs und/oder eines Getriebes denkbar.

In der Figur 21 ist ein Festteil (230) dargestellt. Dieses Festteil (230) ist entweder direkt am Arm des Roboters oder mittels eines Adapters am Roboterarm befestigbar. Es hat im Ausführungsbeispiel einen Festteileingang (244) mit einem Befestigungsflansch (231) mit Befestigungsbohrungen (232) und Zentrierungen (233). Eine Radialzentrierung (234) sichert außerdem die Lage des Festteils (230) relativ zum Roboterarm. Beispielsweise zentral im Festteil (230) ist eine Medienzuführung (235) vorgesehen. Durch diese werden beispielsweise elektrische und pneumatische Leitungen vom Roboterarm in den Innenraum des Festteils (230) geführt. Der Festteilausgang (236) ist z.B. komplementär zu den Eingangsseiten (52) der Schichtmodule (30) ausgebildet. Im Festteil (230) können weiterhin eine Recheneinheit, eine Auswerteeinheit und/oder eine Speichereinheit angeordnet sein.

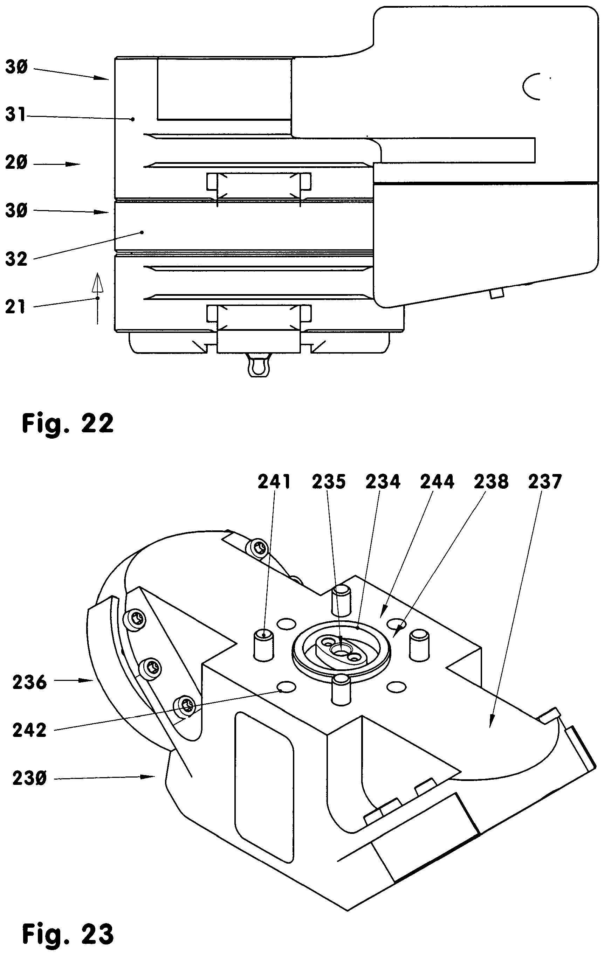

In der Figur 22 ist ein Adaptersystem (20) aus zwei Schichtmodulen (30) dargestellt. Die einzelnen Schichtmodule (30) können in beliebiger Reihenfolge miteinander gefügt werden. Im dargestellten Ausführungsbeispiel ist ein Schichtmodul (30) ein Kameramodul (31). An der Ausgangsseite (81) des Kameramoduls (31) ist ein Kraftmessmodul (32) lösbar befestigt.

Das Fügen der dargestellten Schichtmodule (30) kann manuell oder mittels einer Greifvorrichtung erfolgen. Beispielsweise ist das Kameramodul (31) bereits am Roboterarm montiert oder es sitzt in einer Schichtmodulaufnahme, die beispielsweise in die Greif- oder Führungsausnehmungen (67) eingreift. Das Kraftmessmodul (32) wird so vor das Kameramodul (31) positioniert, dass die Eingangsseite (52) des Kraftmessmoduls (32) zur Ausgangsseite (81) des Kameramoduls (31) zeigt. Die Längsachsen (45) der beiden Schichtmodule (30) fluchten miteinander. Beide Verriegelungsteile (91, 111) des Kameramoduls (31) werden eingedrückt. Beim weiteren Annähern des Kraftmessmoduls (32) an das Kameramodul (31) in der in der Längsrichtung (35) orientierten Montagerichtung (21) tauchen die Führungselemente (121, 131) des Kameramoduls (31) in die Führungselementaufnahmen (55, 56) des Kraftmessmoduls (32) ein. Aufgrund der unterschiedlichen geometrischen Ausbildung der beiden Führungsbolzen (121, 131) und der zugehörigen Führungsbolzenaufnahmen (56, 55) kann das Kraftmessmodul (32) nur in einer Position auf das Kameramodul (31) geschoben werden. Auch andere strukturelle Lösungen zur Sicherstellung der radialen Orientierung der Schichtmodule (30) relativ zueinander sind denkbar. Sobald die Führungsbolzen (121, 131) in die Führungsbolzenaufnahmen (55, 56) eingetaucht sind und die beiden Schichtmodule (31, 32) aneinander anliegen, ist kein weiteres Verschieben des Kraftmessmoduls (32) relativ zum Kameramodul (31) in der Montagerichtung (21) möglich. Die in die Führungsbolzenaufnahmen (55, 56) eingesetzten Führungsbolzen (121, 131) zentrieren das Schichtmodul (30) relativ zum Festteil (230) formschlüssig.

Sobald die Eingangsseite (52) des Kraftmessmoduls (32) an der Ausgangsseite (81) des Kameramoduls (31) anliegt, werden die Verrieglungsteile (91, 111) losgelassen oder entlastet. Die Verriegelungsteile (91, 111) werden mittels der Federelemente (112; 118) nach außen verschoben. Hierbei fährt der jeweilige Haken (96) an den Umgriffsrand (72). Der Haken (96) gleitet mit seiner Hakenunterseite (98) entlang der Unterseite (74) des Umgriffsrands (72). Die beiden Keile ziehen das Kraftmessmodul (32) und das Kameramodul (31) weiter in der Montagerichtung (21) zusammen. Die Haken (96) hintergreifen den jeweiligen Umgriffsrand (72). Die beiden Schichtmodule (30) sind relativ zueinander kraft- und formschlüssig gesichert.

Mit dem Fügen des Adaptersystems (20) werden die beiden Schichtmodule (30, 30) beispielsweise auch pneumatisch miteinander verbunden. Hierzu dienen z.B. die elastisch verformbaren Dichtungseinsätze (57), die beim Fügen komprimiert werden. Die Trennfuge wird damit abgedichtet. Auch ist es denkbar, die pneumatische Verbindung durch die Führungsbolzen (121; 131) hindurch zu leiten. Auch werden beim Fügen des Adaptersystems (20) beispielsweise die elektrischen Leitungen (37) der Schichtmodule (30, 30) miteinander verbunden. Beim Fügen werden die federbelasteten Kontakte (59) der Eingangsseite (52) mittels der Kontaktplatten (83) der Ausgangsseite (81) eingedrückt. Die elektrische Verbindung zwischen den Schichtmodulen (30, 30) ist damit nach dem Fügen federbelastet gesichert. Auch eine hydraulische Verbindung zwischen den Schichtmodulen (30, 30) ist denkbar. Damit können dann beispielsweise Laststrom, Signale, Daten, pneumatisches Medium, hydraulisches Medium, etc. übertragen werden. Das Fügen weiterer Schichtmodule (30) erfolgt, wie oben beschrieben.

Auch das Trennen der Schichtmodule (30, 30) kann manuell oder automatisch erfolgen. In beiden Fällen kann z.B. eines der Schichtmodule (30) z.B. in den Greif- oder Führungsausnehmungen (67) gehalten werden. Dies erfolgt beispielsweise in einer Aufnahmevorrichtung oder mittels eines Greifers. Gegebenenfalls kann die Aufnahmevorrichtung als Entriegelungsvorrichtung ausgebildet sein. Diese Entriegelungsvorrichtung betätigt beispielsweise die Verriegelungselemente (91, 111). Mittels des Tasters (114) oder mittels der Griffbereiche (92) werden beide Verriegelungselemente (91, 111) entgegen den Kräften der Federelemente (112; 118) nach innen verschoben. Die Verriegelungsteile (91, 111) lösen sich von den Umgriffsrändern (72). Das abzunehmende Schichtmodul (30) kann nun vom anderen Schichtmodul (30) entgegen der Montagerichtung (21) abgenommen werden. Beispielsweise wird das abgenommene Schichtmodul (30) in einem Magazin gelagert. Anschließend kann z.B. ein anderes Schichtmodul (30) auf das erste Schichtmodul (30) aufgesetzt werden.

Die Figur 23 zeigt ein Festteil (230) mit einem Festteileingang (244) und zwei Festteilausgängen (236). In diesem Ausführungsbeispiel hat die Bauform eines Y-Festteils (237). Die roboterseitige Schnittstelle (238) dieses Festteils (230) hat beispielsweise eine Radialzentrierung (234) in der Bauform eines Zentrierrings, mehrere Zentrierbolzen (241), Befestigungsdurchbrüche (242) und eine Mediendurchführung (235). Mittels dieser roboterseitigen Schnittstelle (238) kann das Y-Festteil (237) direkt an einem Roboterarm oder über einen Adapter an einem Roboterarm befestigt werden. Das Festteil (230) kann z.B. auch die Gestalt eines T haben. Auch ist es denkbar, das Festteil (230) mit mehr als zwei Festteilausgängen (236) auszubilden.

Das dargestellte Y-Festteil (237) hat zwei Festteilausgänge (236), deren Mittellinien im Ausführungsbeispiel miteinander einen rechten Winkel einschließen. Beide Festteilausgänge (236) sind identisch zueinander ausgebildet. Beispielsweise sind die komplementär zu den Eingangsseiten (52) der Schichtmodule (30) ausgebildet.

Im Y-Festteil (237) werden die vom Roboter kommenden elektrischen und pneumatischen Leitungen umgeordnet und/oder umgruppiert, sodass sie an den Festteilausgängen (236) mit den Pneumatikkanälen (36) und den elektrischen Leitungen (37) der Schichtmodule (30) korrespondieren. Auch eine elektrische Anpassung z.B. der Signalpegel oder der Signalmodulation ist denkbar. Weiterhin kann im Y-Festteil (237) eine Recheneinheit, eine Auswerteinheit und/oder eine Speichereinheit vorgesehen sein.

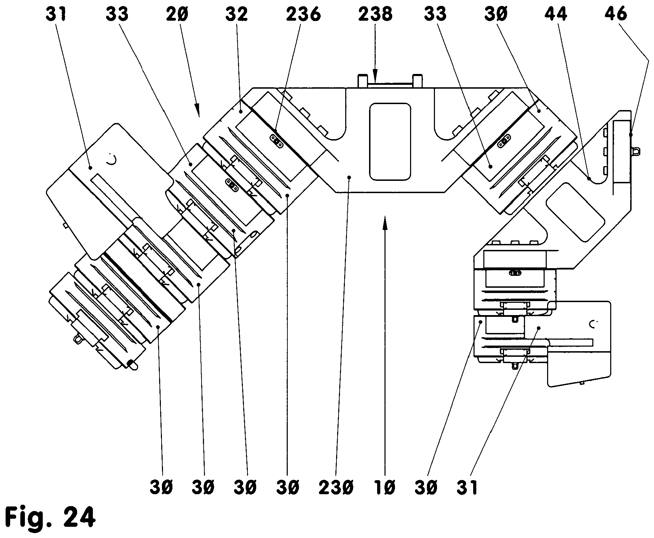

In der Figur 24 ist ein Schichtmodulsystem (10) mit einem Festteil (230) und mehreren Schichtmodulen (30) dargestellt. Das Festteil (230) hat in diesem Ausführungsbeispiel die Gestalt eines Y-Festteils (237) nach Figur 23. An beide Festteilausgänge (236) sind mehrere Schichtmodule (30) mit unterschiedlichen elektrischen, elektromechanischen oder pneumatischen Funktionsbaugruppen (41) angeschlossen. Das Schichtmodulsystem (10) umfasst damit mindestens ein Adaptersystem (20). Das Festteil (230) kann auch mehr als zwei Festteilausgänge (236) haben.

An dem in der Figur 24 linken Festteilausgang (236) sind beispielsweise ein Kameramodul (31), ein Kraftmessmodul (32) ein Rechenmodul (33), und ein Düsenmodul (34) etc. in Reihe hintereinander angeordnet.

Am rechten Festteilausgang (236) ist beispielsweise einem Rechenmodul (33) ein Verteilmodul (44) nachgeschaltet. In diesem Verteilmodul (44) sind beispielsweise eine Recheneinheit und eine Speichereinheit integriert. Die beiden Verteilerausgänge (46) des Verteilmoduls (44) sind in diesem Ausführungsbeispiel kleiner ausgebildet als die Ausgangsseite (81) des vorgeschalteten Rechenmoduls (33). Auch die dem Verteilmodul (44) nachgeschalteten Schichtmodule (30) sind geometrisch kleiner ausgebildet als die übrigen Schichtmodule (30) dieses Schichtmodulsystems (10). Der Aufbau der einzelnen Schichtmodule (30) und ihre Montage ist analog dem Aufbau und der Montage der im Zusammenhang mit den anderen Ausführungsbeispielen beschriebenen Ausführungsformen. Das Festteil (230) des Schichtmodulsystems (10) kann auch gemäß des im Zusammenhang mit der Figur 21 beschriebenen Ausführungsbeispiel ausgebildet sein.

Auch Kombinationen der einzelnen Ausführungsbeispiele sind denkbar.

### Bezugszeichenliste:

- 10: Schichtmodulsystem

- 20: Adaptersystem
- 21: Montagerichtung

- 30: Schichtmodul
- 31: Kameramodul
- 32: Kraftmessmodul
- 33: Rechenmodul
- 34: Düsenmodul
- 35: Längsrichtung
- 36: Pneumatikkanäle
- 37: elektrische Leitungen
- 38: Gruppen elektrischer Kontakte
- 39: Gruppen von Kontaktplatten

- 41: Funktionsbaugruppe
- 42: Innenraum von (30)
- 43: Mantelfläche von (30)
- 44: Verteilmodul
- 45: Längsachse von (30)
- 46: Verteilerausgänge von (44)

- 51: Gehäuse
- 52: Eingangsseite
- 53: Deckenbereich
- 54: Rand
- 55: Führungselementaufnahme, Teil eines mechanischen Verbindungselements
- 56: Führungselementaufnahme, Teil eines mechanischen Verbindungselements
- 57: Dichtungseinsatz
- 58: Eingangskontakte
- 59: Kontaktstift, federbelastet

- 61: Grundkörper
- 62: Oberseite
- 63: ebene Fläche von (54)
- 64: Deckel
- 65: Führungsnuten
- 66: Gewindebohrung
- 67: Greif- oder Führungsausnehmung
- 68: Grundfläche von (67)
- 69: Führungsflächen

- 71: Einsatzstücke
- 72: Umgriffsrand, Teil eines mechanischen Verbindungselements
- 73: Oberseite von (72)
- 74: Unterseite von (72)

- 81: Ausgangsseite
- 82: Bodenplatte
- 83: Kontaktplatten
- 84: Pneumatikanschlüsse
- 85: Anlagebund von(84)
- 86: Kanaleingang
- 87: Kanalausgang

- 91: Verriegelungsteil, erstes Verriegelungsteil, Teil eines mechanischen Verbindungselements
- 92: Griffbereich
- 93: Führungslangloch
- 94: Führungsleisten

- 96: Haken, Hintergriffshaken
- 97: Hakenoberseite
- 98: Hakenunterseite
- 99: Einführschräge

- 101: Federaufnahmen
- 103: Verriegelungsstellung
- 104: Mitnahmezapfen

- 106: Auflagefläche

- 111: Verriegelungsteil, zweites Verriegelungsteil, Teil eines mechanischen Verbindungselements
- 112: Federelemente, Druckfedern
- 113: Mitnahmezapfen
- 114: Taster
- 115: Mitnahmelangloch
- 116: Mitnahmelangloch

- 118: Federelemente, Druckfedern

- 121: Führungselement, erstes Führungselement, Führungsbolzen, Teil eines mechanischen Verbindungselements
- 122: Außengewinde
- 123: Führungsbund
- 124: Auflagebund
- 125: Montageabschnitt

- 127: Schlüsselflächen
- 128: Führungselementkopf
- 129: Kanal

- 131: Führungselement, zweites Führungselement, Führungsbolzen, Teil eines mechanischen Verbindungselements
- 132: Außengewinde
- 133: Führungsbund
- 134: Auflagebund
- 135: Führungsbolzenkopf
- 136: Innensechskant
- 137: Kanal

- 141: Platine
- 142: Steuer- und Auswertemodul
- 143: Recheneinheit
- 144: Speichereinheit, Datenspeichereinheit
- 145: Datenverarbeitungs- und Speichereinheit

- 151: Kamerasystem
- 152: Kameragehäuse
- 153: optische Einheit
- 154: Beleuchtungseinheit
- 155: Linse
- 156: Kamera

- 161: eingangsseitiges Gehäuseteil
- 162: Außenring
- 163: Nabe
- 164: Zentrierbolzenaufnahmen
- 165: Zentrierbolzen
- 166: Gewindebohrungen
- 167: Deckelverschlussschrauben
- 168: Ösen
- 169: Speichen

- 171: ausgangsseitiges Gehäuseteil
- 172: Platinenauflage
- 173: Zentralsteg
- 174: Zentrierbolzenaufnahmen
- 175: Führungsrohre
- 176: Führungsrohre
- 177: Innengewinde

- 181: schichtmodulseitigen Teil einer pneumatischen Eingangsschnittstelle
- 182: schichtmodulseitigen Teil einer pneumatischen Ausgangsschnittstelle
- 183: eingangsseitiges elektrisches Schnittstellenufer
- 184: ausgangsseitiges elektrisches Schnittstellenufer
- 185: eingangsseitige mechanische Adaptergeometrie von (30)
- 186: ausgangsseitige mechanische Adaptergeometrie von (30)

- 191: Düseneingang
- 192: Düseneingang
- 193: Düsenausgang
- 194: Längskanal
- 195: Düse
- 196: Düse
- 197: Düseneinsatz
- 198: Düseneinsatz
- 199: Verschlussplatte

- 201: Mündung von (194) an (52)
- 202: Mündung von (194) an (81)
- 203: Deckenplatte

- 230: Festteil
- 231: Befestigungsflansch
- 232: Befestigungsbohrungen
- 233: Zentrierungen
- 234: Radialzentrierung, Zentrierring
- 235: Medienzuführung
- 236: Ausgabeseite, Festteilausgänge
- 237: Y-Festteil
- 238: Schnittstelle zum Roboter

- 241: Zentrierbolzen
- 242: Befestigungsdurchbrüche
- 244: Festteileingang

## Patentansprüche

1. Schichtmodul (30) zum Einsatz an einem Roboter, mit einer eine eingangsseitige mechanische Adaptergeometrie (185) aufweisenden Eingangsseite (52) und mit einer, eine ausgangsseitige mechanische Adaptergeometrie (186) aufweisenden Ausgangsseite (81), wobei die eingangsseitige mechanische Adaptergeometrie (185) und die ausgangsseitige mechanische Adaptergeometrie (186) zueinander komplementär ausgebildet sind, wobei das Schichtmodul (30) zumindest eine elektrische, elektromechanische, hydraulische und/oder pneumatische Funktionsbaugruppe (41) aufweist und wobei diese Funktionsbaugruppe (41) an der Eingangsseite (52) und/oder an der Ausgangsseite (81) elektrisch, hydraulisch und/oder pneumatisch kontaktierbar ist, **dadurch gekennzeichnet,**
- **dass** das Schichtmodul (30) mindestens zwei federbelastete, verschiebbar oder verschwenkbar gelagerte Verriegelungsteile (111; 91) und mindestens zwei in Längsrichtung (35) des Schichtmoduls (30) orientierte, geometrisch unterschiedlich ausgebildete Führungselemente (121, 131) aufweist,
- **dass** jedes der Verriegelungsteile (91; 111) jeweils ein Führungselement (121; 131) umgreift,
- sodass das Schichtmodul (30) mit einem, einen zur Eingangsseite (52) oder zur Ausgangsseite (81) komplementären Festteilausgang (236) aufweisenden Festteil (230) und/oder mit mindestens einem weiteren Schichtmodul (30) kraft- und/oder formschlüssig kuppelbar ist.

2. Schichtmodul (30) nach Anspruch 1, **dadurch gekennzeichnet, dass** alle Verriegelungsteile (91, 111) und sämtliche Führungselemente (121, 131) entweder an der Eingangsseite (52) oder an der Ausgangsseite (81) des Schichtmoduls (30) angeordnet sind.

3. Schichtmodul (30) nach Anspruch 1, **dadurch gekennzeichnet, dass** in seinem Innenraum (42) eine Datenverarbeitungs- und Speichereinheit (145) angeordnet ist.

4. Schichtmodul (30) nach Anspruch 3, **dadurch gekennzeichnet, dass** die Datenverarbeitungs- und Speichereinheit (145) einen Datenspeicher (144) und einen Energiespeicher umfasst.

5. Schichtmodul (30) nach Anspruch 1, **dadurch gekennzeichnet, dass** in seinem Innenraum (42) mindestens eine hydraulische oder pneumatische Düse (195; 196) angeordnet ist.

6. Schichtmodul (30) nach Anspruch 1, **dadurch gekennzeichnet, dass** an der Eingangsseite (52) und an der Ausgangsseite (81) zueinander komplementäre elektrische Kontakte (58, 83) angeordnet sind, wobei entweder mindestens ein elektrischer Kontakt (58) der Eingangsseite (52) oder mindestens ein elektrischer Kontakt (83) der Ausgangsseite (81) in der Längsrichtung (35) des Schichtmoduls (30) als federbelasteter Kontaktstift (59) ausgebildet ist.

7. Schichtmodul (30) nach Anspruch 1, **dadurch gekennzeichnet, dass** an der Eingangsseite (52) und an der Ausgangsseite (81) zueinander komplementäre, mittels eines Pneumatikkanals (36) verbunden pneumatische Anschlüsse (181, 182) angeordnet sind, wobei der pneumatische Anschluss (181) der Eingangsseite (52) oder der pneumatische Anschluss (182) der Ausgangsseite (81) einen Dichtungseinsatz (57) aufweist.

8. Adaptersystem (20) aus mindestens zwei Schichtmodulen (30) nach Anspruch 1, **dadurch gekennzeichnet, dass** die Ausgangsseite (81) eines ersten dieser Schichtmodule (30) mit der Eingangsseite (52) eines zweiten dieser Schichtmodule (30) kraft- und/oder formschlüssig verbunden ist.

9. Schichtmodulsystem (10) aus einem Adaptersystem (20) nach Anspruch 8 und aus einem Festteil (230), wobei das Festteil (230) mit der freien Eingangsseite (52) oder mit der freien Ausgangsseite (81) des Adaptersystems (20) kraft- und/oder formschlüssig verbunden ist, **dadurch gekennzeichnet, dass** der Festteilausgang (236) komplementär zu der mit dieser gekoppelten Eingangsseite (52) oder Ausgangsseite (81) des Adaptersystems (20) ausgebildet ist.

10. Schichtmodulsystem (10) nach Anspruch 9, **dadurch gekennzeichnet, dass** das Festteil (230) einen Festteileingang (244) und mindestens zwei Festteilausgänge (236) hat.

## Claims

1. A layer module (30) for use on a robot, with an input side (52) comprising with an input-side mechanical adapter geometry (185) and with an output side (81) comprising an output-side mechanical adapter geometry (186), wherein the input-side mechanical adapter geometry (185) and the output-side mechanical adapter geometry (186) are designed complementary to one another, wherein the layer module (30) comprises at least one electrical, electromechanical, hydraulic and/or pneumatic functional assembly (41) and wherein this functional assembly (41) can be contacted electrically, hydraulically and/or pneumatically at the input side (52) and/or at the output side (81), **characterised in that**
- the layer module (30) comprises at least two spring-loaded, displaceably or pivotably mounted locking parts (111; 91) and at least two geometrically differently designed guide elements (121, 131) orientated in the longitudinal direction (35) of the layer module (30),
- each of the locking parts (91; 111) engages respectively around a guide element (121; 131),
- that the layer module (30) can be coupled in a force-fit and/or form-fit manner with a fixed part (230) comprising a fixed part output (236) complementary with the input side (52) or the output side (81) and/or with the least one further layer module (30).

2. The layer module (30) according to claim 1, **characterised in that** all the locking parts (91, 111) and all the guide elements (121, 131) are arranged either at the input side (52) or at the output side (81) of the layer module (30).

3. The layer module (30) according to claim 1, **characterised in that** a data processing and memory unit (145) is arranged in its interior (42).

4. The layer module (30) according to claim 3, **characterised in that** the data processing and memory unit (145) comprises a data memory (144) and an energy store.

5. The layer module (30) according to claim 1, **characterised in that** at least one hydraulic or pneumatic nozzle (195; 196) is arranged in its interior (42) .

6. The layer module (30) according to claim 1, **characterised in that** electrical contacts (58, 83) complementary with one another are arranged at the input side (52) and at the output side (81), wherein either at least one electrical contact (58) of the input side (52) or at least one electrical contact (83) of the output side (81) is designed as a spring-loaded contact pin (59) in the longitudinal direction (35) of the layer module (30).

7. The layer module (30) according to claim 1, **characterised in that** pneumatic connections (181, 182) connected by means of a pneumatic channel (36) complementary to one another are arranged at the input side (52) and at the outlet side (81), wherein the pneumatic connection (181) of the input side (52) or the pneumatic connection (182) of the output side (81) comprises a sealing insert (57).

8. An adapter system (20) comprising at least two layer modules (30) according to claim 1, **characterised in that** the output side (81) of a first of these layer modules (30) is connected in a force-fit and/or form-fit manner to the input side (52) of a second of these layer modules (30).

9. A layer module system (10) comprising an adapter system (20) according to claim 8 and a fixed part (230), wherein the fixed part (230) is connected in a force-fit and/or form-fit manner to the free input side (52) or to the free output side (81) of the adapter system (20), **characterised in that** the fixed part output (236) is designed complementary to the input side (52) or output side (81) of the adapter system (20) coupled therewith.

10. The layer module system (10) according to claim 9, **characterised in that** the fixed part (230) has a fixed part input (244) and at least two fixed part outlets (236).

## Revendications

1. Module en couche (30) pour utilisation sur un robot, avec un côté d'entrée (52) comportant une géométrie d'adaptateur mécanique (185) du côté d'entrée et avec un côté de sortie (81) comportant une géométrie d'adaptateur mécanique (186) du côté de sortie, sachant que la géométrie d'adaptateur mécanique (185) du côté d'entrée et la géométrie d'adaptateur mécanique (186) du côté de sortie sont constituées de façon complémentaire entre elles, sachant que le module en couche (30) comporte au moins un ensemble fonctionnel électrique, électromécanique, hydraulique et/ou pneumatique (41) et sachant que cet ensemble fonctionnel (41) peut être mis en contact du point de vue électrique, hydraulique et/ou pneumatique sur le côté d'entrée (52) et/ou sur le côté de sortie (81), **caractérisé en ce que**
- le module en couche (30) comporte au moins deux parties de verrouillage (111, 91) à ressort, logées pouvant être mobiles ou pivotantes et au moins deux éléments de guidage (121, 131) orientés en direction longitudinale (35) du module en couche (30), constitués de façon différente du point de vue géométrique,
- chacune des parties de verrouillage (91, 111) enveloppe respectivement un élément de guidage (121, 131),
- de telle sorte que le module en couche (30) peut être couplé par conformité de force et/ou de forme avec une partie fixe (230) comportant une sortie de partie fixe (236) complémentaire au côté d'entrée (52) ou au côté de sortie (81) et/ou avec au moins un autre module en couche (30).

2. Module en couche (30) selon la revendication 1, **caractérisé en ce que** toutes les parties de verrouillage (91, 111) et tous les éléments de guidage (121, 131) sont disposés soit sur le côté d'entrée (52), soit sur le côté de sortie (81) du module en couche (30).

3. Module en couche (30) selon la revendication 1, **caractérisé en ce qu'**une unité de traitement de données et de mémorisation (145) est disposée dans son espace intérieur (42).

4. Module en couche (30) selon la revendication 3, **caractérisé en ce que** l'unité de traitement de données et de mémorisation (145) comprend une mémoire de données (144) et un accumulateur d'énergie.

5. Module en couche (30) selon la revendication 1, **caractérisé en ce qu'**au moins une buse hydraulique ou pneumatique (195, 196) est disposée dans son espace intérieur (42).

6. Module en couche (30) selon la revendication 1, **caractérisé en ce que** des contacts électriques (58, 83) complémentaires entre eux, sont disposés sur le côté d'entrée (52) et sur le côté de sortie (81), sachant que soit au moins un contact électrique (58) du côté d'entrée (52) soit au moins un contact électrique (83) du côté de sortie (81) est constitué dans la direction longitudinale (35) du module en couche (30) sous la forme d'une tige de contact à ressort (59).

7. Module en couche (30) selon la revendication 1, **caractérisé en ce que** des raccords pneumatiques (181, 182) complémentaires entre eux, reliés au moyen d'un conduit pneumatique (36) sont disposés sur le côté d'entrée (52) et sur le côté de sortie (81), sachant que le raccord pneumatique (181) du côté d'entrée (52) ou le raccord pneumatique (182) du côté de sortie (81) comporte un élément d'étanchéité (57).

8. Système d'adaptateur (20) composé d'au moins deux modules en couche (30) selon la revendication 1, **caractérisé en ce que** le côté sortie (81) d'un premier de ces modules en couche (30) est relié par conformité de force et/ou de forme au côté d'entrée (52) d'un deuxième de ces modules en couche (30).

9. Système de module en couche (10) composé d'un système d'adaptateur (20) selon la revendication 8 et d'une partie fixe (230), sachant que la partie fixe (230) est reliée par conformité de force et/ou de forme au côté d'entrée libre (52) ou au côté de sortie libre (81) du système d'adaptateur (20), **caractérisé en ce que** la sortie de partie fixe (236) est constituée de façon complémentaire au côté d'entrée (52) ou côté de sortie (81) couplé à celle-ci du système d'adaptateur (20).

10. Système de module en couche (10) selon la revendication 9, **caractérisé en ce que** la partie fixe (230) possède une entrée de partie fixe (244) et au moins deux sorties de partie fixe (236).
